# FASCICULE DE BREVET EUROPEEN

(11) **EP 1 824 722 B1**
(45) Date de publication et mention de la délivrance du brevet: **24.02.2010**
(21) Numéro de dépôt: 05824074.8
(22) Date de dépôt: 02.12.2005
(51) Int. Cl.: B62D 25/08, B62D 29/00

(54) **TRAVERSE POUR SUPPORT DE PARE-BRISE SUR UN VEHICULE AUTOMOBILE**
QUERTRÄGER ZUR ABSTÜTZUNG DER WINDSCHUTZSCHEIBE EINES KRAFTFAHRZEUGS
CROSS-MEMBER FOR SUPPORTING THE WINDSHIELD OF A MOTOR VEHICLE

(30) Priorité: 03.12.2004 FR 0412836
(43) Date de publication de la demande: 29.08.2007
(73) Titulaire: RENAULT S.A.S., 92100 Boulogne Billancourt (FR)
(72) Inventeur: GAUMONT, Hervé, F-92410 Ville d'Avray (FR); L'HERMINE, Olivier, F-75116 Paris (FR); GRIGNON, Nicolas, F-91300 Massy (FR)
(74) Mandataire: Guyon, Rodolphe C.
(86) Numéro de dépôt international: PCT/FR2005/051029
(87) Numéro de publication internationale: WO 2006/059049

(56) Documents cités:
- EP-A- 1 380 494
- WO-A-2006/027508
- US-A1- 2004 159 481
- US-A1- 2004 207 233
- US-B1- 6 193 304
- US-B1- 6 199 940
- PATENT ABSTRACTS OF JAPAN vol. 008, no. 037 (M-277), 17 février 1984 (1984-02-17) & JP 58 194666 A (KASAI KOGYO KK), 12 novembre 1983 (1983-11-12)

## Description

L'invention concerne une traverse pour support de pare-brise sur un véhicule automobile. Le document EP 1 380 494 décrit une traverse selon le préambule de la revendication 1.

La structure d'un véhicule automobile comporte en général une traverse de baie, placée transversalement au véhicule et dans la partie inférieure de la baie, et destinée à servir d'appui à un pare-brise. Cette traverse est en général prolongée vers le bas par un tablier pour séparer un habitacle d'un compartiment moteur. Il est important que cette traverse soit rigide en flexion dans un plan sensiblement vertical et également en torsion pour éviter de transmettre des vibrations vers le pare-brise et limiter le niveau sonore à l'intérieur du véhicule.

Cette traverse est également utilisée comme conduit aéraulique pour le passage de l'air de renouvellement de l'atmosphère du véhicule. L'air qui pénètre à l'intérieur de la traverse, en provenance de l'extérieur, peut être chargé de gouttelettes d'eau. La traverse sert de chambre de tranquilisation et l'eau peut s'y déposer. Aussi est-il important que la traverse soit bien protégée contre la corrosion.

Le document EP 1 346 903 montre une structure de véhicule comportant une traverse de baie réalisée par l'assemblage par soudure de deux éléments en tôle emboutie de manière à former un caisson. Cependant, pour qu'une telle traverse puisse être utilisée comme conduit aéraulique et puisse laisser passer suffisamment d'air vers le boîtier de climatisation, il est nécessaire d'augmenter sa section. Sa rigidité n'est alors plus suffisante.

L'invention vise à fournir une traverse de baie simple à réaliser et offrant de bonnes qualités de rigidité.

Avec ces objectifs en vue, l'invention a pour objet une traverse de baie comportant au moins un élément supérieur et un élément inférieur fixés entre eux de manière à former un caisson s'étendant le long d'une direction de traverse. Elle comporte en outre au moins un couple s'étendant sensiblement perpendiculairement à la direction de traverse à l'intérieur du caisson et dont la périphérie est fixée sur le caisson.

Avec une telle traverse, on a constaté que la rigidité et le comportement vibratoire sont améliorés par rapport à une traverse sans couple. De plus, la traverse est simple à réaliser car elle ne nécessite que l'élément supérieur et l'élément inférieur, en plus du couple.

C'est un autre objectif de l'invention de fournir une traverse de baie pouvant servir de conduit aéraulique.

Pour cela, le couple comporte au moins une ouverture. Ainsi, l'air peut circuler dans la traverse à travers l'ouverture.

Le couple est réalisé en matière synthétique. Il n'est ainsi pas exposé à des risques de corrosion.

Un tel couple est fixé au caisson par l'intermédiaire d'un joint intumescent à la chaleur et adhésif, placé à la périphérie du couple. Le procédé de fabrication de la structure comporte des opérations de traitement de surface, par exemple une cataphorèse, et une étape de mise en température de la structure. Lors de la cataphorèse, la structure est trempée dans un bain. Ainsi, du fait que le couple n'est pas encore en contact avec le caisson, la surface du caisson en regard des couples est traitée par le bain et se trouve ainsi protégée contre la corrosion. Puis, lors de la mise en température, le joint intumescent en périphérie du couple prend du volume et vient en appui contre le caisson. Après le refroidissement, le joint adhère au caisson et au couple et se rigidifie, formant ainsi une excellente liaison entre les deux pièces.

De manière particulière, le couple comporte des moyens de fixation temporaire pour maintenir le couple en position avant le gonflement du joint. Le couple est ainsi maintenu en place jusqu'à la phase de montée en température. Ces moyens sont par exemple des tenons prévus sur le couple coopérant avec des orifices dans le caisson.

A titre d'exemple, le joint gonfle pour une température supérieure à 70 °C. Le gonflement ne se produit pas alors de manière accidentelle, mais uniquement pendant la phase de montée en température.

Le joint est interrompu au niveau de la partie la plus basse de la traverse pour ménager un passage inférieur. L'eau qui se dépose éventuellement dans la traverse ruisselle dans la partie basse de la traverse et peut passer par le passage inférieur de part et d'autre du couple. On ne crée donc pas de barrage à l'écoulement de l'eau.

L'invention sera mieux comprise et d'autres particularités et avantages apparaîtront à la lecture de la description qui va suivre, la description faisant référence aux dessins annexés parmi lesquels :
- la figure 1 est une vue en perspective d'une traverse de baie conforme à l'invention ;
- la figure 2 est une vue de la traverse de la figure 1 en éclaté ;
- la figure 3 est une coupe transversale de la traverse de la figure 1.

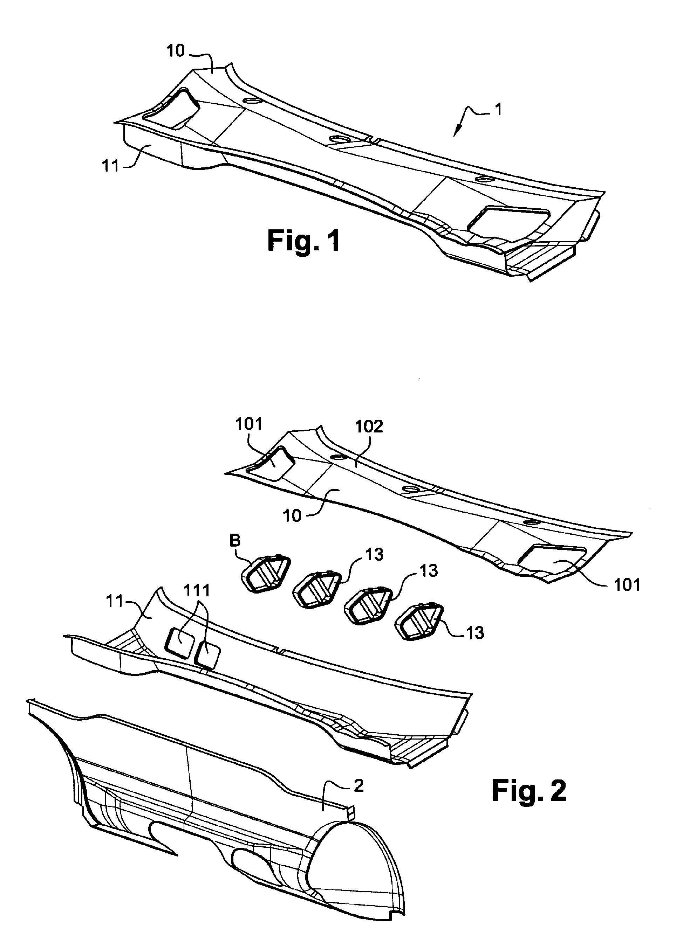

Une traverse de baie conforme à l'invention est montrée sur les figures 1 à 3. Cette traverse de baie assure le soutien d'un pare-brise 3 d'un véhicule automobile. Elle est prolongée vers le bas par un tablier 2 pour séparer un habitacle 4 d'un compartiment moteur 5.

La traverse comporte un élément supérieur 10 et un élément inférieur 11 fixés entre eux de manière à former un caisson 1. Ils sont fixés par exemple par soudure par points le long des bords longitudinaux 100, 110 de chacun des éléments 10, 11. L'élément supérieur 10 comporte une ouverture 101 d'entrée d'air à chacune de ses extrémités. L'élément inférieur 11 comporte un passage d'air 111 vers un boîtier de climatisation, non représenté.

La traverse comporte également quatre couples 13 disposés à l'intérieur du caisson 1. La section des couples 13 coïncide avec celle du caisson 1 aux endroits où les couples 13 sont placés, avec un jeu périphérique de l'ordre de quelques millimètres, par exemple 3 millimètres. Chaque couple 13 comporte à sa périphérie un joint 132 en polymère. Un passage inférieur 14 est prévu au niveau de la partie basse du caisson 1. Ce passage inférieur est réalisé par une interruption du joint et par un jeu agrandi entre le couple et le caisson 1.

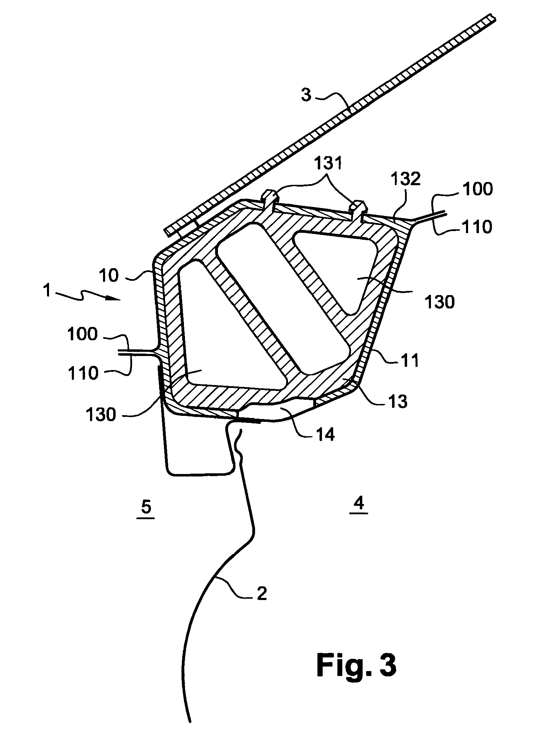

Le joint 132 est intumescent et gonfle lorsqu'il est soumis à une température supérieure à au moins 70 °C. Le joint 132 est fixé par collage sur le couple 13. Après gonflement, comme représenté sur la figure 3, il adhère au caisson 1 et établit une liaison entre le couple 13 et le caisson 1 après refroidissement et durcissement.

Chaque couple 13 comporte des moyens de fixation temporaire formés par des tenons élastiques 131 coopérant par encliquetage avec des orifices 102 pratiqués dans l'élément supérieur 10.

Pour réaliser la traverse, on place d'abord les couples 13 sur l'élément supérieur 10, par l'encliquetage des tenons élastiques 131. Puis, on assemble le premier élément 10 avec le deuxième 11 par soudure et masticage. La traverse ainsi réalisée est assemblée avec le reste de la structure du véhicule, et en particulier le tablier 2. L'ensemble de la structure passe ensuite par une chaîne de traitement de surface, avec une étape de cataphorèse. Dans ce traitement, une étape comprend une montée en température. Lors de cette montée en température, les joints 132 des couples 13 gonflent et réalisent la liaison avec le caisson 1.

## Revendications

1. Traverse de baie pour support de pare-brise d'un véhicule automobile comportant au moins un élément supérieur (10) et un élément inférieur (11) fixés entre eux de manière à former un caisson (1) s'étendant le long d'une direction de traverse, au moins un couple (13) en matière synthétique s'étendant sensiblement perpendiculairement à la direction de traverse à l'intérieur du caisson (1) et dont la périphérie est fixée sur le caisson (1), **caractérisée en ce que** le couple (13) est fixé au caisson (1) par l'intermédiaire d'un joint (132) intumescent à la chaleur et adhésif, placé à la périphérie du couple (13), le joint (132) étant interrompu au niveau de la partie la plus basse du caisson (1) pour ménager un passage inférieur (14).

2. Traverse de baie selon la revendication 1, dans laquelle le couple (13) comporte au moins une ouverture (130).

3. Traverse de baie selon la revendication 1, dans laquelle le couple (13) comporte des moyens de fixation temporaire (131) pour maintenir le couple (13) en position avant le gonflement du joint (132).

4. Traverse de baie selon la revendication 1, dans laquelle le joint (132) gonfle pour une température supérieure à 70 °C.

## Claims

1. Cross-member for an opening for supporting a motor vehicle windscreen comprising at least one upper element (10) and one lower element (11) which are so joined together as to form a box structure (1) running in a cross direction, at least one frame (13) made of synthetic material running substantially at right angles to the cross direction inside the box structure (1) with its periphery attached to the box section (1), **characterized in that** the frame (13) is attached to the box section (1) via a heat-intumescent and adhesive gasket (132) positioned at the periphery of the frame (13), the gasket (132) being interrupted at the lowermost part of the box structure (1) to create a bottom passage (14).

2. Cross-member of an opening according to Claim 1, in which the frame (13) has at least one opening (130).

3. Cross-member of an opening according to Claim 1, in which the frame (13) comprises means (131) of temporary attachment to hold the frame (13) in position before the gasket (132) swells.

4. Cross-member of an opening according to Claim 1, in which the gasket (132) swells at a temperature in excess of 70°C.

## Patentansprüche

1. Öffnungsquerträger zur Abstützung der Windschutzscheibe eines Kraftfahrzeugs, mit mindestens einem oberen Element (10) und einem unteren Element (11), die aneinander befestigt sind, um ein Gehäuse (1) zu bilden, das sich entlang einer Querrichtung erstreckt, wobei sich mindestens ein Rahmen (13) aus Kunststoff im Wesentlichen senkrecht zu der Querrichtung im Inneren des Gehäuses (1) erstreckt, dessen Umfang an dem Gehäuse (1) befestigt ist, **dadurch gekennzeichnet, dass** der Rahmen (13) mittels einer bei Wärme intumeszierenden Klebverbindung (132), die am Umfang des Rahmens (13) platziert ist, an dem Gehäuse (1) befestigt ist, wobei die Verbindung (132) an dem tiefsten Teil des Gehäuses (1) unterbrochen ist, um einen unteren Durchgang (14) auszubilden.

2. Öffnungsquerträger nach Anspruch 1, wobei der Rahmen (13) mindestens einen Durchbruch (130) aufweist.

3. Öffnungsquerträger nach Anspruch 1, wobei der Rahmen (13) Mittel (131) zur vorübergehenden Befestigung aufweist, um den Rahmen (13) vor dem Aufblähen der Verbindung (132) in Position zu halten.

4. Öffnungsquerträger nach Anspruch 1, wobei sich die Verbindung (132) bei einer Temperatur über 70°C aufbläht.
